# EUROPEAN PATENT APPLICATION

(11) **EP 1 359 006 A1**
(43) Date of publication of application: **05.11.2003**
(21) Application number: 01982832.6
(22) Date of filing: 16.11.2001
(51) Int. Cl.: B32B 15/08, B21D 22/20, B21D 22/28

(54) **METAL PRODUCT WITH EXCELLENT MOLDABILITY SURFACE-TREATED WITH ALKALI-SOLUBLE LUBRICANT**

(30) Priority: 16.11.2000 JP 2000350175
(71) Applicant: NIPPON STEEL CORPORATION, Tokyo 100-8071 (JP); MITSUI TAKEDA CHEMICALS, INC., Tokyo 100-6009 (JP)
(72) Inventor: YAMAOKA, I., Nippon Steel Corp. Techn. Dev. Bureau, Futtsu-shi, Chiba 293-8511 (JP); KANAI, H, Nippon Steel Corp. Techn. Dev. Bureau, Futtsu-shi, Chiba 293-8511 (JP); MIYASAKA, A., Nippon Steel Corp. Techn. Dev. Burea, Futtsu-shi, Chiba 293-8511 (JP); MORI, Yoichiro, C/O NIPPON STEEL CORPORATION, Tokyo 100-8071 (JP); TAWA, Tsutomu, C/O MITSUI TAKEDA CHEMICALS, INC., Osaka-shi, Osaka 532-0024 (JP); NISHIMURA, M., C/O MITSUI TAKEDA CHEMICALS, Inc., Osaka-shi, Osaka 532-0024 (JP); KOUDA, Chikako, C/O MITSUI TAKEDA CHEMICALS, INC., Osaka-shi, Osaka 532-0024 (JP)
(74) Representative: VOSSIUS & PARTNER
(86) International application number: JP0110062
(87) International publication number: WO02040266

(57) **Abstract**

A surface-lubricated metal product, with excellent shapability, comprising a metal having coated on both surfaces, or one surface, thereof an alkali-soluble lubricating film mainly comprising an alkali-soluble polyurethane aqueous composition containing a carboxyl group or a sulfonic acid group within the molecule, and a lubricating function-imparting agent in an amount of 1 to 30 mass% based on the alkali-soluble polyurethane aqueous composition, the film being coated to have a film thickness of 0.5 to 10 µm and the elastic modulus of the film after coating being 0.5 to 20 GPa at 25°C.

## Description

### TECHNICAL FIELD OF THE INVENTION

The present invention relates to a surface-lubricated metal product, with excellent shapability, which has an alkali-soluble lubricating film on the surface.

### BACKGROUND ART

In working, such as press shaping a metal sheet, a lubricating oil or the like is usually coated so as to prevent the metal surface and the metal mold surface from being scratched due to poor lubrication. However, the coating of a lubricating oil gives rise to a cumbersome production process and the splashing of lubricating oil worsens the working environment. Furthermore, in the degreasing step after press shaping, the lubricating oil is removed using an organic halogen-base solvent such as fluorocarbon, trichloroethane and dichloromethane, but these solvents not only adversely affect the health of workers but also the majority thereof are a substance having an extremely high load on the environment (They produce greenhouse effect gases which are ozone layer-depleting substances and have global warming effects as high as several hundred to ten thousand times the effect of CO₂). Many of these solvents are chemicals which will be discontinued under the Montreal Protocol in view of protecting the ozone layer. In order to avoid use of these solvents, a substitute method is required.

Attempts are being made to dispense with degreasing by using a volatile lubricating oil or to perform degreasing using an organic solvent. However, the volatile lubricating oil cannot give sufficiently high shapability during severe press shaping and, when an organic solvent is used, problems arise regarding safety. Also, a non-removing type lubricating film of giving excellent shapability, corrosion resistance and solvent resistance without using a lubricating oil or a solvent for removing has been developed. However, the lubricating film remains on the metal surface after the press shaping and, therefore, this technique cannot be used when the final product is required to have gloss or texture on the metal surface or when the worked product passes through a welding step. To solve this problem, a removing-type lubricating film which can be dissolved and removed in an alkali degreasing step, after press shaping, has been developed. This alkali removing-type lubricating film is suitably used where a glossy metal surface must be made available or a good welding property is required after working.

Japanese Unexamined Patent Publications (Kokai) No. 8-156177, No. 8-252887, No. 10-114014 and No. 10-88364 have proposed an alkali removing-type lubricating film using an acrylic resin. However, the alkali removing-type lubricating film using an acrylic resin sometimes fails in ensuring sufficiently high shapability and, for example, galling occurs under severe press shaping conditions such as deep drawing and ironing. More specifically, when the press shaping is performed without a coating of a lubricating oil, unless the elastic modulus of the lubricating film coated on a metal is sufficiently high, the lubricating film is damaged due to pressure from the metal mold under severe shaping conditions such as deep drawing or ironing (press working with a minus clearance), the metal mold and the surface of a metal to be worked adhere to induce mold galling and, as a result, the lubricating film peeled off at the galled part attaches to the metal mold or shaping failure such that impairment of the appearance of the metal surface is caused and these are a serious problem in the working.

An object of the present invention is to solve these problems and provide an alkali soluble lubricant surface-treated metal product having excellent shapability.

### DISCLOSURE OF THE INVENTION

The present inventors have made extensive investigations to solve the above problems and to obtain an alkali soluble lubricant surface-treated metal product having excellent shapability and, as a result, have found that the above-described object can be attained when both surfaces or one surface of a metal are coated with an alkali-soluble lubricating film mainly comprising a lubricating function-imparting agent and an alkali-soluble polyurethane aqueous composition containing a carboxyl group or a sulfonic acid group within the molecule and where the elastic modulus of the film after coating is 0.5 to 20 GPa at 25°C. The present invention has been accomplished based on this finding.

More specifically, the alkali soluble lubricant surface-treated metal product with excellent shapability, of the present invention, is characterized in that:
(1) an alkali-soluble lubricating film mainly comprising (A) an alkali-soluble polyurethane aqueous composition containing a carboxyl group or a sulfonic acid group within the molecule and (B) a lubricating function-imparting agent in an amount of 1 to 30 mass% (wt%) based on the alkali-soluble polyurethane aqueous composition is coated on both surfaces or one surface of a metal product to have a film thickness of 0.5 to 10 µm and the elastic modulus of the film after coating is 0.5 to 20 GPa at 25°C, wherein by coating this alkali-soluble lubricating film, a metal product capable of exhibiting sufficiently high shapability even under severe press shaping conditions such as deep drawing or ironing can be obtained;
(2) in the alkali soluble lubricant surface-treated metal product of the present invention, the alkali-soluble lubricating film mainly comprises (A) an alkali-soluble polyurethane aqueous composition, (B) a lubricating function-imparting agent in an amount of 1 to 30 mass% based on the alkali-soluble polyurethane aqueous composition and (C) a silica particle in an amount of 1 to 30 mass% based on the alkali soluble polyurethane aqueous composition, wherein by adding the silica particle within the above-described range, the adhesion between the alkali-soluble lubricating film and the metal product surface is enhanced and the film strength of the alkali-soluble lubricating film is increased and, as a result, the galling resistance is improved;
(3) in the alkali soluble lubricant surface-treated metal product of the present invention, the amount of the acid radical contained in the alkali-soluble polyurethane aqueous composition (A) constituting the alkali-soluble lubricating film is from 30 to 180 in terms of the acid value wherein, by introducing a compound having an acid radical in an acid value of 30 to 180 in the polyurethane molecule, the coated film can have a flexibility capable of allowing shaping even under severe shaping conditions, despite the fact that the film after coating on a metal has a relatively high elastic modulus of 0.5 to 20 GPa at 25°C;
(4) in the alkali soluble lubricant surface-treated metal product of the present invention, the neutralizer for the acid radical contained in the alkali-soluble polyurethane aqueous composition (A) forming the alkali-soluble lubricating film is sodium hydroxide or potassium hydroxide, wherein by using sodium hydroxide or potassium hydroxide as the neutralizer for the acid radical, the alkali solubility required in the present invention can be achieved;
(5) in the alkali soluble lubricant surface-treated metal product of the present invention, the main component constituting the alkali-soluble polyurethane aqueous composition (A) forming the alkali-soluble lubricating film is a polyester polyol wherein, by using a polyester polyol as the main component constituting the alkali-soluble polyurethane aqueous composition (A), the alkali solubility required in the present invention can be achieved even at a low temperature such as room temperature;
(6) in the alkali soluble lubricant surface-treated metal product of the present invention, the lubricating function-imparting agent (B) forming the alkali-soluble lubricating film comprises one or more member selected from the group consisting of a polyolefin-base wax, a paraffin-base wax, a stearic acid-base solid lubricant and a wax comprising a fluorine-containing resin wherein, by the addition of this lubricating function-imparting agent, a low dynamic friction coefficient can be ensured over a wide temperature range and a good lubricating function can be attained;
(7) in the alkali soluble lubricant surface-treated metal product of the present invention, the elastic modulus of the film after coating is 0.5 to 6 GPa at 25°C and, at the same time, the tensile elongation percentage of the alkali-soluble polyurethane aqueous composition (A) as the main component of the film exceeds 10%, or the elastic modulus of the film after coating exceeds 6 GPa at 25°C and, at the same time, the tensile elongation percentage of the alkali-soluble polyurethane aqueous composition (A) as the main component of the film is 10% or less wherein, by having such a constitution, the film can be balanced in the elasticity and elongation and a metal product capable of exhibiting a sufficiently high shapability even under severe press shaping conditions can be provided;
(8) in the alkali soluble lubricant surface-treated metal product of the present invention, the glass transition temperature of the alkali-soluble polyurethane aqueous composition (A) in the coated lubricating film is 100°C or more wherein, although a steel sheet surface sometimes reaches a temperature of 100°C or more due to frictional heat during working under severe press shaping conditions of continuously performing deep drawing or ironing without using a lubricating oil, the glass transition temperature of the alkali-soluble polyurethane aqueous composition, as a continuous phase in the lubricating film, is 100°C or more and, therefore, even when the steel sheet surface reaches a temperature of 100°C or more, the film does not decrease in elastic modulus and exhibits an excellent galling resistance;
(9) in the alkali soluble lubricant surface-treated metal product of the present invention, the alkali-soluble lubricating film mainly comprises (A) an alkali-soluble polyurethane aqueous composition containing a carboxyl group or a sulfonic acid group within the molecule and (B) a lubricating function-imparting agent in an amount of 1 to 30 mass% based on the alkali-soluble polyurethane aqueous composition, the main component of the alkali-soluble polyurethane aqueous composition is a polyester polyol, the neutralizer for the acid radical contained in the alkali-soluble polyurethane aqueous composition (A) is sodium hydroxide or potassium hydroxide, the amount of the acid radical contained in the alkali-soluble polyurethane aqueous composition (A) is from 30 to 180 in terms of the acid value, the lubricating function-imparting agent (B) comprises one or more member selected from the group consisting of a polyolefin-base wax, a paraffin-base wax, a stearic acid-base solid lubricant and a wax comprising a fluorine-containing resin, the alkali-soluble lubricating film is coated on both surfaces or one surface of a metal to have a film thickness of 0.5 to 10 µm, the elastic modulus of the film after coating is 0.5 to 6 GPa at 25°C and, at the same time, the tensile elongation percentage of the alkali-soluble polyurethane aqueous composition (A) as the main component of the film exceeds 10%, or the elastic modulus of the film after coating exceeds 6 GPa at 25°C and, at the same time, the tensile elongation percentage of the alkali-soluble polyurethane aqueous composition (A) as the main component of the film is 10% or less, and the glass transition temperature of the alkali-soluble polyurethane aqueous composition (A) is 100°C or more, wherein the alkali soluble lubricant surface-treated metal product maintains excellent shapability even under severe press shaping such as deep drawing or ironing and shaping failures hardly occur; and
(10) the alkali soluble lubricant surface-treated metal product as described in (9) of the present invention may further comprise (C) silica particles in an amount of 1 to 30 mass% based on the alkali-soluble polyurethane aqueous composition, wherein by containing silica particles, as such, the adhesion between the alkali-soluble lubricating film and the metal product surface is enhanced and the film strength of the alkali-soluble lubricating film is increased and, as a result, the galling resistance is improved.

### BRIEF DESCRIPTION OF THE DRAWINGS

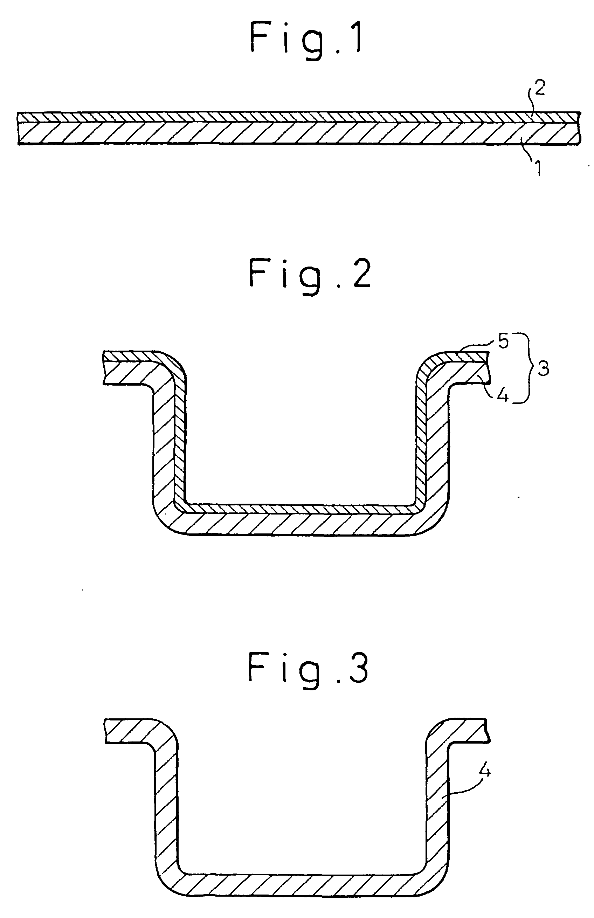

Figs. 1 to 3 are views for explaining the process of producing and using the alkali soluble lubricant surface-treated metal product of the present invention.

### MODE FOR CARRYING OUT THE INVENTION

The present invention is described in detail below.

The present inventors have made extensive investigations on an alkali soluble lubricant surface-treated metal product having a function of exhibiting sufficiently high shapability under continuous shaping conditions and bringing about dissolution or desorption of the lubricating film in the alkali degreasing step after shaping and, as a result, it has been found that this function is brought out when the film obtained after coating a coating material composition comprising an alkali-soluble polyurethane aqueous composition and a lubricating function-imparting agent on a metal surface has an elastic modulus of 0.5 to 20 GPa at 25°C (preferably, the elastic modulus of the film after coating is from 0.5 to 6 GPa at 25°C and, at the same time, the tensile elongation percentage of the alkali-soluble polyurethane aqueous composition (A) as the main component of the film exceeds 10%, or the elastic modulus of the film after coating exceeds 6 GPa and at the same time, the tensile elongation percentage of the alkali-soluble polyurethane aqueous composition (A) as the main component of the film is 10% or less), the alkali-soluble polyurethane aqueous composition contains a carboxyl group or a sulfonic acid group within the molecule in the range from 30 to 180 in terms of the acid value, and sodium hydroxide or potassium hydroxide is used as the neutralizer for the acid.

The alkali-soluble polyurethane aqueous composition for use in the present invention can be obtained by reacting a compound having at least two isocyanate groups per one molecule, a compound having at least two active hydrogen groups per one molecule and a compound having at least one or more active hydrogen group within the molecule and containing an acid radical such as carboxyl group or sulfonic acid group, and dissolving or dispersing the reactant in water.

Examples of the compound having at least two isocyanate groups per one molecule for use in the present invention include aliphatic diisocyanates such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate and 2,6-diisocyanatomethyl caproate; alicyclic diisocyanates such as 1,3-cyclopentane diisocyanate, 1,4-cyclohexane diisocyanate, 1,3-cyclohexane diisocyanate, 3-isocyanatomethyl-3,5,5-trimethylcyclohexyl isocyanate, 4,4'-methylenebis(cyclohexylisocyanate), methyl-2,4-cyclohexane diisocyanate, methyl-2,6-cyclohexane diisocyanate, 1,4-bis(isocyanatomethyl)cyclohexane, 1,3-bis(isocyanatomethyl)cyclohexane and norbornene diisocyanate; aromatic diisocyanates such as m-phenylene diisocyanate, p-phenylene diisocyanate, 4,4'-diphenyl diisocyanate, 1,5-naphthalene diisocyanate, 4,4'-diphenylmethane diisocyanate, 2,4- or 2,6-tolylene diisocyanate or a mixture thereof, 4,4'-toluidine diisocyanate, dianisidine diisocyanate and 4,4'-diphenylether diisocyanate; and aroma-aliphatic diisocyanates such as 1,3- or 1,4-xylylene diisocyanate or a mixture thereof, ω,ω'-diisocyanato-1,4-diethylbenzene, and 1,3- or 1,4-bis(1-isocyanto-1-methylethyl)benzene or a mixture thereof. These various isocyanate group-containing compounds may be used, but an aromatic, aroma-aliphatic or aliphatic isocyanate compound is preferably used and reacted so that the lubricating film after coating can have an elastic modulus of 0.5 to 20 GPa, mold galling can be prevented and a sufficiently high shapability can be attained.

Examples of the compound having at least two active hydrogen groups per one molecule include compounds having an amino group, a hydroxyl group or a mercapto group as the group having active hydrogen. Among these, in view of the reaction rate with an isocyanate group and the mechanical properties after coating, compounds having a hydroxy group are preferred. Also, from the standpoint of good mechanical properties of the film, the number of functional groups in the compound having active hydrogen groups is preferably from 2 to 6, more preferably from 2 to 4. Furthermore, in view of the concentration of a urethane bond which affects the final film performance and also in view of workability in production, the molecular weight of the compound having active hydrogen groups is preferably from 200 to 10,000, more preferably from 300 to 5,000.

Examples of the compound having a hydroxyl group as the active hydrogen group include a polyester polyol, a polyether polyol, a polyether ester polyol, a polyester amide polyol, an acrylpolyol, a polycarbonate polyol, a polyhydroxyalkane, a caster oil, a polyurethane polyol, and a mixture thereof.

In addition to the above-described polyol, for the purpose of adjusting the urethane group concentration to optimize the film property, a low molecular weight polyol having a molecular weight of 62 to 200 may be mixed. Specific examples of the low molecular weight polyol include glycols for use in the production of a polyester polyol, such as ethylene glycol, propylene glycol, 1,3-propanediol, 1,4-butanediol, 1,5-pentanediol, 1,6-hexanediol, 1,9-nonanediol, 1,8-nonanediol, neopentyl glycol, 2-methylpentanediol, 3-methylpentanediol, 3,3-dimethylolheptane, 2,2,4-trimethyl-1,3-pentanediol, 2,4-diethyl-1,5-pentanediol, diethylene glycol, dipropylene glycol, 1,4-cyclohexanediol and 1,4-cyclohexanedimethanol; and compounds such as glycerin, trimethylolpropane and pentaerythritol.

These various compounds having an active hydrogen group may be used, but for attaining alkali solubility at a low temperature such as room temperature, a polyester polyol and a polyurethane polyol constituted by a polyester polyol are preferred.

Examples of the compound having at least one or more active hydrogen group within the molecule and containing an acid group such as carboxyl group or sulfonic acid group include sulfonic acid-containing compounds, such as 2-oxyethanesulfonic acid, phenolsulfonic acid, sulfobenzoic acid, sulfosuccinic acid, 5-sulfoisophthalic acid, sulfanilic acid, 1,3-phenylenediamine-4,6-disulfonic acid and 2,4-diaminotoluene-5-sulfonic acid, derivatives thereof and polyester polyols obtained by copolymerizing these compounds or derivatives; carboxyl group-containing compounds, such as 2,2-dimethylolpropionic acid, 2,2-dimethylolbutyric acid, 2,2-dimethylolvaleric acid, dioxymaleic acid, 2,6-dioxybenzoic acid and 3,4-diaminobenzoic acid, derivatives thereof and polyester polyols obtained by copolymerizing these compounds or derivatives; and carboxyl group-containing compounds obtained by reacting a compound having an anhydride group such as maleic anhydride, phthalic anhydride, succinic anhydride, trimellitic anhydride and pyromellitic anhydride with a compound having an active hydrogen group, and derivatives thereof.

A carboxyl group or a sulfonic acid group may be introduced into the alkali-soluble polyurethane aqueous composition by copolymerizing at least one or more of the above-described acid radical-containing compounds during the production of a polyurethane prepolymer or reacting it in the chain elongation reaction. The acid group is introduced into the polyurethane molecule in the acid value range of 30 to 180 whereby, despite the high elastic modulus of 0.5 to 20 GPa after coating on a metal surface, flexibility capable of allowing shaping, even under severe shaping conditions, is imparted to the film.

In order to successfully dissolve or disperse the alkali-soluble polyurethane aqueous composition in water, a large number of carboxyl groups or sulfonic acid groups in the polyurethane aqueous composition must be neutralized. Examples of the neutralizer which can be used include primary amines such as ammonia, methylamine, ethylamine, n-propylamine and n-butylamine, secondary amines such as dimethylamine, diethylamine and diisopropylamine, tertiary amines such as trimethylamine, triethylamine, triethanolamine, triisopropanolamine and dimethylethanolamine, and alkali metal hydrides such as sodium hydroxide and potassium hydroxide. These may be used individually or in a combination of two or more thereof. The neutralizer may be added directly to the polyurethane prepolymer or added to water when the prepolymer is dissolved or dispersed in the water. The amount of the neutralizer added is preferably from 0.1 to 2.0 equivalent, more preferably from 0.3 to 1.3 equivalent, to the hydrophilic group.

In order to attain the good alkali solubility required in the present invention, sodium hydroxide or potassium hydroxide is preferably contained as the neutralizer. This is far of the following reasons. When sodium hydroxide or sulfonium hydroxide is used as the neutralizer for the carboxyl group (-COOH) or sulfonic acid group (-SO₃H) in the polyurethane composition, the sodium ion or potassium ion becomes a neutralizing ion species of the carboxyl group or sulfonic acid group and such an ion is not dissipated by volatilization even at the film formation on a metal sheet but remains in the film as the neutralizing ion species (for example, -COO⁻Na⁺ or -SO₃⁻K⁺) after the film is formed. When the surface-treated metal product is dipped in an alkali solution, the sodium ion or potassium ion is readily dissociated and the ionized carboxyl group (-COO⁻) or sulfonic acid group (-SO₃⁻) is immediately hydrated and, as a result, the film is dissolved. Thus, the film can have good alkali solubility. On the other hand, in the case of using the above-described amines or the like as the neutralizer, a neutralizer such as an amine has a readily volatilized property and, due to the conditions at the film formation on a metal sheet, the neutralizer is partially or entirely volatilized to return the neutralization part which is once neutralized by the neutralizer to the carboxyl group or sulfonic acid group and, as a result, even when the surface-treated metal product is dipped in an alkali, hydration scarcely occurs. Thus, the film fails to have a good alkali solubility, in some cases.

In order to more successfully dissolve or disperse the alkali-soluble polyurethane aqueous composition in water, a surfactant or the like may be used.

In synthesizing the above-described polyurethane prepolymer, an organic solvent may also be used. In the case of using an organic solvent, specific examples of the organic solvent include acetone, methyl ethyl ketone, ethyl acetate, acetonitrile and N-methylpyrrolidone. The amount of the organic solvent is preferably on the order of 3 to 50 mass% based on the reaction raw materials.

The polyurethane prepolymer is dissolved or dispersed in water using a homogenizer, a mixer or the like. At this time, the temperature is preferably from room temperature to about 70°C so as to prevent the evaporation of the basic substance neutralizing the hydrophilic group and ensure the workability. Furthermore, during the dispersion in a medium such as water, the concentration of the polyurethane aqueous composition is preferably from 10 to 50 mass% so as to not excessively increase the viscosity and to maintain the storage stability.

Also, another chain elongating agent may be further reacted to give a high molecular weight. As the chain elongating agent, for example, known polyamine compounds are used. Examples of known polyamine compounds include diamines such as ethylenediamine, 1,2-propanediamine, 1,6-hexamethylenediamine, piperazine, 2,5-dimethylpiperazine, isophoronediamine, 4,4'-dicyclohexylmethanediamine, 3,3'-dimethyl-4,4'-dicyclohexylmethanediamine and 1,4-cyclohexanediamine; polyamines such as diethylenetriamine, dipropylenetriamine, triethylenetetramine and tetraethylenepentamine; compounds having an amino group and a hydroxyl group, such as hydroxyethylhydrazine, hydroxyethyldiethylenetriamine, 2-[(2-aminoethyl)amino]ethanol and 3-aminopropanediol; hydrazines; and acid hydrazides. These polyamine compounds can be used individually or as a mixture of two or more thereof.

In the alkali-soluble polyurethane aqueous composition of the present invention, a film forming aid, a leveling agent, a defoaming agent and a weather resistance stabilizer may be added, if desired.

The film of the alkali-soluble polyurethane aqueous composition of the present invention is most efficiently solubilized and removed by alkali degreasing but may also be removed by using warm water or a solvent.

The lubricating function-imparting agent for use in the present invention has a function of reducing the coefficient of friction on the film surface and thereby further imparting lubricity to prevent mold galling or the like and to improve the press workability and the drawing workability. The lubricating function-imparting agent for use in the present invention is not particularly limited as long as it is a particle mainly comprising (a) a solid lubricant or wax comprising a long-chain aliphatic hydrocarbon and having no polar group, (b) a solid lubricant or wax having a long-chain aliphatic hydrocarbon group (long-chain alkyl group) and a polar group within one molecule or (c) a solid lubricant or wax comprising a fluorine-containing resin and it can be stably and uniformly dispersed in an aqueous treating solution. Preferred examples of the lubricating function-imparting agent for use in the present invention include those comprising a polyolefin-base wax with the hydrocarbon group having from 125 to 700 carbons, such as polyethylene and polypropylene, or a paraffin with the hydrocarbon group having from 32 to 72 carbons (microwax) as the component (a), a stearic acid-base solid lubricant as the component (b), or a polytetrafluoroethylene, a polychlorotrifluoroethylene, a polyvinylidene fluoride, a polyvinyl fluoride or the like as the component (c), and those obtained by mixing or modifying one or more of these solid lubricants or waxes (a), (b) and (c).

Examples of the solid lubricant or wax (b) include a higher aliphatic alcohol with the hydrocarbon group having from 12 to 22 carbons, such as cetyl alcohol and stearyl alcohol; a higher fatty acid with the hydrocarbon group having from 13 to 17 carbons, such as stearic acid and 12-hydroxystearic acid; a metal soap comprising a divalent metal and a higher fatty acid with the hydrocarbon group having from 12 to 30 carbons, such as lead stearate, zinc stearate and calcium stearate; as the ester type, an ester of a higher fatty acid with the hydrocarbon group having from 13 to 17 carbons and another hydrocarbon, an ester of a higher aliphatic alcohol with the hydrocarbon group having from 13 to 17 carbons and an aliphatic dicarboxylic acid or a fatty acid, and an ester of a polyhydric alcohol and a higher fatty acid, such as glycerin tristearate and trimethylolpropane tristearate; as the fatty acid amide type, a monoamide or a bisamide of a higher fatty acid with the hydrocarbon group having from 15 to 17 carbons, such as palmitic acid amide, stearic acid amide, oleic acid amide, ethylene bisstearoamide and methylene bisstearoamide; and as the waxes, a higher fatty acid wax with the hydrocarbon group having from 27 to 34 carbons, a wax comprising an ester of a higher fatty acid with the hydrocarbon group having from 27 to 34 carbons and an aliphatic diol, and a polar polyethylene wax with the hydrocarbon group having from 125 to 700 carbons, such as wax where a carboxyl group is bonded at the terminal of polyethylene chain and an acid group such as hydroxyl group is bonded to some place on the chain.

The average particle size of the particle-shape lubricating function-imparting agent for use in the present invention is preferably 10 µm or less. If the average particle size exceeds 10 µm, not only does the film lose continuity and uniformity to decrease the adhesion to the substrate steel sheet or the adhesive property of the coating material and generate the peeling of the lubricating function-imparting agent but, also, the coating material composition suffers from low storage stability. The average particle size of the lubricating function-imparting agent is more preferably from 0.5 to 6 µm. The "average particle size" as used herein means "d50 (50% average particle size)" obtained by plotting a relational curve between the particle size and the cumulative volume ratio and reading the particle size when the cumulative volume ratio is 50%. At this time, the measurement is performed as follows. A laser ray is irradiated in the state where particles are dispersed in a solvent, and the interference fringe generated is analyzed to determine d50 or the particle size distribution. In the measurement by the present inventors, a SALD-3000S manufactured by Shimadzu Corporation was used. The "d50" can also be measured by a general-purpose measuring device of other companies, such as a CILAS manufactured by CILAS and an LA manufactured by Horiba Seisakusho.

The amount of the lubricating function-imparting agent added is from 1 to 30 mass%, preferably from 5 to 20 mass%, based on the solid content of the polyurethane aqueous composition. If the amount added is less than 1%, the required lubricating effect cannot be obtained, whereas if it exceeds 30 mass%, problems arise, for example, the film strength decreases or the lubrication-imparting agent is desorbed.

In the case of improving the film strength and the adhesion to the substrate surface, silica is added. The silica particle may be any silica particle such as water-dispersible colloidal silica, ground silica and vapor phase silica. On taking account of the workability of film and the corrosion resistance, the primary particle size is preferably from 2 to 30 nm and the secondary aggregated particle size is preferably 100 nm or less. The amount of silica added is preferably from 1 to 30 mass% based on the solid content of the alkali-soluble polyurethane aqueous composition. If the amount added is less than 1%, a sufficiently high effect of improving the corrosion resistance is not obtained and a sufficiently strong adhesion to the lower layer is also not obtained. If the amount of silica added exceeds 30%, the film elongation decreases and this causes a reduction in workability to readily generate galling.

In addition to those components (A), (B) and (C), the lubricating film coated on the surface-lubricated metal product of the present invention may contain, if desired, a pigment for imparting a design property, an electrically conducting additive for imparting electrical conductivity, a thickening agent, a defoaming agent, a dispersant, a desiccating agent, a stabilizer, an anti-skinning agent, an antifungal, an antiseptic, an anti-freezing agent, and the like, according to the purpose within range which does not deteriorate the properties of film.

In the present invention, the elastic modulus of the alkali-soluble lubricating film formed on a metal surface is, as the elastic modulus after coating, from 0.5 to 20 GPa, preferably from 1.0 to 10 GPa, at 25°C. If this elastic modulus is less than 0.5 GPa, the film is readily damaged under severe press shaping conditions such as deep drawing or ironing and a sufficiently high shapability cannot be expected, whereas if it exceeds 20 GPa, the film cannot maintain the flexibility capable of allowing shaping under severe shaping conditions. The "elastic modulus after coating" as used herein means a Young's modulus obtained based on the Universal hardness testing specified in DIN50359 and the like. In the measurement by the present inventors, an ultrafine hardness testing machine "FISHER SCOPE H-100" manufactured by Fisher Instrument Co. was used, but the elastic modulus after coating can also be measured by a similar device by another company. A Vickers quadrangular pyramid-shaped diamond indenter is used and, to eliminate the effect of the metal surface far harder than the film, the maximum penetration depth of the indenter is set to 1/2 or less of the film thickness.

Furthermore, in the present invention, it is preferred that the elastic modulus of the alkali-soluble lubricating film formed on a metal surface is, as the elastic modulus after coating, from 0.5 to 6.0 GPa at 25°C and, at the same time, the tensile elongation percentage of the alkali-soluble polyurethane aqueous composition (A) exceeds 10%, or the elastic modulus after coating exceeds 6.0 GPa at 25°C and, at the same time, the tensile elongation percentage of the alkali-soluble polyurethane aqueous composition (A) is 10% or less, and it is more preferred that the elastic modulus after coating is from 1.0 to 6.0 GPa at 25°C and, at the same time, the tensile elongation percentage of the alkali-soluble polyurethane aqueous composition (A) exceeds 10%, or the elastic modulus after coating is from more than 6.0 GPa to 10 GPa at 25°C and, at the same time, the tensile elongation percentage of the alkali-soluble polyurethane aqueous composition (A) is 10% or less. In either case, where the elastic modulus after coating is from 0.5 to 6.0 GPa and the tensile elongation percentage of (A) is 10% or less or where the elastic modulus after coating is from more than 6.0 GPa to 20 GPa and the tensile elongation percentage of (A) exceeds 10%, the film lacks in the balance between elasticity and elongation, and a sufficiently high shapability cannot be exerted.

In the present invention, the glass transition temperature of the alkali-soluble polyurethane aqueous composition (A) in the alkali-soluble lubricating film formed on a metal surface is preferably 100°C or more. Under severe press shaping conditions of continuously performing deep drawing or ironing without using a lubricating oil, a steel sheet surface sometimes reaches a temperature of 100°C or more due to frictional heat during working. In such a case, if the glass transition temperature of the alkali-soluble polyurethane aqueous composition (A) forming a continuous phase in the lubricating film is less than 100°C, the elastic modulus of the lubricating film decreases to induce mold galling and the lubricating film peeled at the galled part adheres to the metal mold or measurement failures such as impairment of the appearance on the meal surface are caused. The "glass transition temperature" as used herein means a glass transition temperature determined from peaks on a DSC curve obtained using a differential scanning calorimetry (DSC) device at a temperature increasing rate of 5.0°C/min in a dry nitrogen atmosphere.

The thickness of the lubricating film coated on the surface-lubricated metal product of the present invention is from 0.5 to 10 µm. If the thickness is less than 0.5 µm, the film pressed at the working cannot prevent damage to the plating layer and in addition, due to sliding, the required workability cannot be obtained. If the thickness exceeds 10 µm, peeled film dust increases at the shaping and this requires frequent cleaning of the metal mold, giving rise to reduction in the productivity.

The lubricating resin film of the present invention is coated on both front and back surfaces or one surface of a metal product according to the purpose. The lubricating film coated on the surface-lubricated metal product of the present invention can be formed by coating the film using a conventionally known method such as roll coater coating method and spray method, and bake-drying it. In the present invention, to obtain higher corrosion resistance and a higher adhesive property, the substrate may be subjected to a phosphate treatment or a chromate treatment. The chromate treatment may be any of an electrolysis-type chromate treatment, a reaction-type chromate treatment and a coating-type chromate treatment. The chromate film is preferably a film formed by coating a chromate solution comprising a partially reduced chromic acid and one or more member selected from silica, phosphoric acid and hydrophilic resin, and drying the solution.

In the phosphate treatment, the amount of phosphate attached is preferably from 0.5 to 3.5 g/m² as phosphate. In the chromate treatment, the amount of chromate attached is, in terms of metal chromium, preferably from 5 to 150 mg/m², more preferably from 10 to 50 mg/m². If the amount attached is less than 5 mg/m², an effect of giving excellent corrosion resistance cannot obtained, whereas if it exceeds 150 mg/m², the chromate film undergoes cohesion failure during shaping and the workability decreases. According to the purpose, the substrate may be further subjected to an acid washing treatment, an alkali treatment, an electrolytic reduction treatment, a cobalt plating treatment, a nickel plating treatment, a silane coupling agent treatment or an inorganic silicate treatment.

In the present invention, the metal used is not particularly limited and examples of the metal which can be used include aluminum, titanium, zinc, copper, nickel, an alloy containing such a metal, and steel. In the case of using a steel, the components are not particularly limited and either a common steel or a chromium-containing steel, such as stainless steel, may be used. The shape of the steel product is also not limited and a steel sheet such as cold-rolled steel sheet and hot-rolled steel sheet, a steel tube, a steel wire or the like can be used.

A covering plating layer may be present on the surface of a steel and the kind thereof is not limited but examples of the plating layer which can be used include a zinc-base plating layer such as zinc plating, zinc-nickel plating, zinc-iron plating, zinc-chromium plating, zinc-aluminum plating, zinc-titanium plating, zinc-magnesium plating and zinc-manganese plating, an aluminum or aluminum alloy plating layer, a lead or lead alloy plating layer, a tin or tin alloy plating layer, and those plating layers where a small amount of one or more heteroelement such as cobalt, molybdenum, tungsten, nickel, titanium, chromium, aluminum, manganese, iron, magnesium, lead, antimony, tin, copper, cadmium and arsenic is contained or an inorganic material such as silica, alumina and titania is dispersed.

The present invention can also be applied to a multilayer plating layer comprising a combination of the above-described plating and another kind of plating such as iron plating and iron-phosphorus plating. The plating method is not particularly limited and electroplating, hot dipping, vapor deposition plating and the like can be used. In the case of a steel sheet, the treatment after plating includes, for example, a zero spangling treatment which is an appearance uniformalizing treatment after hot dipping, an annealing treatment which is a treatment for reforming the plating layer, and temper-rolling for adjusting the surface state or material quality, however, in the present invention, the after-treatment is not particularly limited and any of these treatments can be applied.

In the metal product having formed thereon the lubricating film of the present invention, a lubricating oil or a lubricating anti-rust oil can be further coated on the film. However, the lubricating oil or lubricating anti-rust oil coated is preferably an oil which does not swell or dissolve the lubricating film of the present invention.

The process of producing and using the alkali soluble lubricant surface-treated metal product of the present invention is described below by referring to Figs. 1 to 3. An alkali-soluble lubricating film-forming composition is coated on a steel sheet 1 to form a lubricating film 2 (Fig. 1). The steel sheet 1 having formed thereon the lubricating film 2 is subjected, for example, to deep drawing and thereby a molded product 3 is obtained. This molded product comprises a steel sheet 4 and a lubricating film 5 and on the steel sheet 4, and scratching or galling is not observed (Fig. 2). After the shaping, the metal product 3 is treated with an alkali solution by a dipping method or a spray method to remove the lubricating film 5 and obtain a metal product 4 as a final product (Fig. 3).

### EXAMPLES

The present invention will be described, in greater detail below, by referring to Examples and Comparative Examples. However, the present invention is not limited to these Examples.

### 1. Sample Metal Sheet

The following metal sheets were used as the metal sheet on which a lubricating film is coated.
· Zinc electroplated steel sheet (thickness: 0.8 mm, plated amount: 20 g/m²)
· Zinc-nickel alloy electroplated steel sheet (thickness: 0.8 mm, plated amount: 20 g/m²)
· Zinc-iron alloy electroplated steel sheet (thickness: 0.8 mm, plated amount: 20 g/m²)
· Zinc hot-dipped steel sheet (thickness: 0.8 mm, plated amount: 150 g/m²)
· Zinc-iron alloy hot-dipped steel sheet (thickness: 0.8 mm, plated amount: 45 g/m²)
· Zinc-aluminum alloy hot-dipped steel sheet (thickness: 0.8 mm, plated amount: 150 g/m²)
· Aluminum-silicon alloy hot-dipped steel sheet (thickness: 0.8 mm, plated amount: 50 g/m²)
· Aluminum-silicon-magnesium alloy hot-dipped steel sheet (thickness: 0.8 mm, plated amount: 50 g/m²)
· Stainless steel sheet (thickness: 0.8 mm, SUS 430, 2B finish)
· Aluminum alloy sheet (thickness: 0.8 mm)
· Cold-rolled steel sheet (thickness: 0.8 mm)

Of these metal sheets, in the case of plated steel sheet, a coating-type chromate solution obtained by adding colloidal silica to chromic acid having a chromium reduction ratio of (Cr(VI)/entire Cr)=0.4 was coated by a roll coater to have a chromium attached amount of 20 mg/m² in terms of metal chromium, and dried under heating to form a chromate film. In the case of stainless steel sheet, aluminum alloy sheet and cold-rolled steel sheet, the chromate treatment was not applied.

### 2. Polyurethane Aqueous Composition

The alkali-soluble polyurethane aqueous compositions used were prepared as follows.

### (Production Example 1)

In a four-neck flask equipped with a stirrer, a Dimroth condenser, a nitrogen inlet, a silica gel drying tube and a thermometer, 87.11 g of 3-isocyanatomethyl-3,5,5-trimethylcyclohexylisocyanate, 31.88 g of 1,3-bis(1-isocyanato-1-methylethyl)benzene, 41.66 g of dimethylolpropionic acid, 4.67 g of triethylene glycol, 62.17 g of a polyester polyol comprising adipic acid, neopentyl glycol and 1,6-hexanediol and having a molecular weight of 2,000, and 122.50 g of acetonitrile as the solvent were added and, after elevating the temperature to 70°C, it was stirred for 4 hours in a nitrogen atmosphere. Then, it was confirmed that the solution reached a predetermined amine equivalent. Thus, an acetonitrile solution of polyurethane prepolymer was obtained. Subsequently, 346.71 g of the obtained polyurethane prepolymer solution was dispersed using a homodisper in an aqueous solution obtained by dissolving 12.32 g of sodium hydroxide in 639.12 g of water, and thereby formed into an emulsion. In this polyurethane emulsion, 12.32 g of 2-[(2-aminoethyl)amino]ethanol diluted with 110.88 g of water was added to perform a chain elongation reaction. Thereafter, acetonitrile used in the synthesis of polyurethane prepolymer was removed by distillation at 50°C under a reduced pressure of 150 mmHg. As a result, a polyurethane emulsion substantially free of a solvent and having an acid value of 69, a solid content concentration of 25 mass% and a viscosity of 30 mPa·s, was obtained.

### (Production Example 2)

In a four-neck flask equipped with a stirrer, a Dimroth condenser, a nitrogen inlet, a silica gel drying tube and a thermometer, 132.49 g of 3-isocyanatomethyl-3,5,5-trimethylcyclohexylisocyanate, 48.49 g of 1,3-bis(1-isocyanato-1-methylethyl)benzene, 57.09 g of dimethylolpropionic acid, 10.61 g of triethylene glycol, 141.31 g of a polyester polyol comprising adipic acid, neopentyl glycol and 1,6-hexanediol and having a molecular weight of 2,000, and 210.00 g of acetone as the solvent were added and, after elevating the temperature to 50°C, it was stirred for 7 hours in a nitrogen atmosphere. Then, it was confirmed that the solution reached a predetermined amine equivalent. Thus, an acetone solution of polyurethane prepolymer was obtained. Subsequently, 485.97 g of the obtained polyurethane prepolymer solution was dispersed using a homodisper in an aqueous sodium hydroxide solution obtained by dissolving 13.80 g of sodium hydroxide in 667.12 g of water, and thereby formed into an emulsion. In this polyurethane emulsion, 15.32 g of 2-[(2-aminoethyl)amino]ethanol diluted with 137.88 g of water was added to perform a chain elongation reaction. Thereafter, acetone used in the synthesis of polyurethane prepolymer was removed by distillation at 50°C under a reduced pressure of 150 mmHg. As a result, a polyurethane emulsion substantially free of a solvent and having an acid value of 56, a solid content concentration of 30 mass% and a viscosity of 100 mPa·s, was obtained.

### (Production Example 3)

In a four-neck flask equipped with a stirrer, a Dimroth condenser, a nitrogen inlet, a silica gel drying tube and a thermometer, 120.69 g of 3-isocyanatomethyl-3,5,5-trimethylcyclohexylisocyanate, 44.17 g of 1,3-bis(1-isocyanato-1-methylethyl)benzene, 47.06 g of dimethylolpropionic acid, 12.44 g of triethylene glycol, 165.65 g of a polyester polyol comprising adipic acid, neopentyl glycol and 1,6-hexanediol and having a molecular weight of 2,000, and 210.00 g of acetonitrile as the solvent were added and, after elevating the temperature to 70°C, it was stirred for 5 hours in a nitrogen atmosphere. Then, it was confirmed that the solution reached a predetermined amine equivalent. Thus, an acetonitrile solution of polyurethane prepolymer was obtained. Subsequently, 491.37 g of the obtained polyurethane prepolymer solution was dispersed using a homodisper in an aqueous sodium hydroxide solution obtained by dissolving 11.50 g of sodium hydroxide in 678.01 g of water, and thereby formed into an emulsion. In this polyurethane emulsion, 14.11 g of 2-[(2-aminoethyl)amino]ethanol diluted with 126.99 g of water was added to perform a chain elongation reaction. Thereafter, acetonitrile used in the synthesis of polyurethane prepolymer was removed by distillation at 50°C under a reduced pressure of 150 mmHg. As a result, a polyurethane emulsion substantially free of a solvent and having an acid value of 47, a solid content concentration of 30 mass% and a viscosity of 35 mPa·s, was obtained.

### (Production Example 4)

In a four-neck flask equipped with a stirrer, a Dimroth condenser, a nitrogen inlet, a silica gel drying tube and a thermometer, 111.49 g of 3-isocyanatomethyl-3,5,5-trimethylcyclohexylisocyanate, 45.72 g of dimethylolbutyric acid, 192.8 g of a polyester polyol comprising isophthalic acid, sebacic acid, neopentyl glycol and ethylene glycol and having a molecular weight of 2,500, and 150.00 g of acetonitrile as the solvent were added and, after elevating the temperature to 70°C, it was stirred for 5 hours in a nitrogen atmosphere. Then, it was confirmed that the solution reached a predetermined amine equivalent. Thus, an acetonitrile solution of polyurethane prepolymer was obtained. Subsequently, 403.25 g of the obtained polyurethane prepolymer solution was dispersed using a homodisper in an aqueous sodium hydroxide solution obtained by dissolving 9.95 g of sodium hydroxide in 630.07 g of water and, thereby, formed into an emulsion. In this polyurethane emulsion, 7.77 g of 2-[(2-aminoethyl)amino]ethanol diluted with 69.93 g of water was added to perform a chain elongation reaction. Thereafter, acetonitrile used in the synthesis of polyurethane prepolymer was removed by distillation at 50°C under reduced pressure of 150 mmHg. As a result, a polyurethane emulsion substantially free of a solvent and having an acid value of 47, a solid content concentration of 30 mass% and a viscosity of 15 mPa·s, was obtained.

### (Production Example 5)

In a four-neck flask equipped with a stirrer, a Dimroth condenser, a nitrogen inlet, a silica gel drying tube and a thermometer, 20.35 g of 3-isocyanatomethyl-3,5,5-trimethylcyclohexylisocyanate, 67.03 g of 1,3-bis(1-isocyanato-1-methylethyl)benzene, 24.05 g of dimethylolbutyric acid, 238.58 g of a polyester polyol comprising adipic acid, neopentyl glycol and 1,6-hexanediol and having a molecular weight of 2,000, and 150.00 g of acetone as the solvent were added and after elevating the temperature to 50°C, it was stirred for 7 hours in a nitrogen atmosphere. Then, it was confirmed that the solution reached a predetermined amine equivalent. Thus, an acetone solution of polyurethane prepolymer was obtained. Subsequently, 393.45 g of the obtained polyurethane prepolymer solution was dispersed using a homodisper in an aqueous triethanolamine solution obtained by dissolving 19.05 g of triethanolamine in 650.14 g of water, and thereby formed into an emulsion. In this polyurethane emulsion, 5.54 g of 2-[(2-aminoethyl)amino]ethanol diluted with 49.86 g of water was added to perform a chain elongation reaction. Thereafter, acetone used in the synthesis of polyurethane prepolymer was removed by distillation at 50°C under a reduced pressure of 150 mmHg. As a result, a polyurethane emulsion substantially free of a solvent and having an acid value of 24.0, a solid content concentration of 30 mass% and a viscosity of 50 mPa·s, was obtained.

### 3. Lubricating Function-Imparting Agent (wax or solid lubricant)

The following waxes or lubricants were used as the lubricating function-imparting agent.
· PE wax A (low-density polyethylene wax, softening temperature: 110°C, average particle size: 4.0 µm, dispersed as an aqueous emulsion, solid content: 40 mass%)
· PE wax B (low-density polyethylene wax, softening temperature: 110°C, average particle size: 1.0 µm, dispersed as an aqueous emulsion, solid content: 40 mass%)
· PTFE wax (polytetrafluoroethylene wax, average particle size: 0.8 µm, dispersed as an aqueous emulsion, solid content: 60 mass%)
· Paraffin wax (synthetic paraffin wax, melting point: 105°C, average particle size: 5.0 µm, dispersed as an aqueous emulsion, solid content: 33 mass%)
· Calcium stearate (average particle size: 2.0 µm, dispersed as an aqueous emulsion, solid content: 40 mass%)

### 4. Silica Particles

As the silica particles, colloidal silica having a particle size of 10 to 20 nm, a pH of 8.6 and a heating residue of about 20 mass% was added to a content of 10 mass% in the film.

### 5. Production of Surface-Lubricated Metal Product

### (Example 1)

| | |
|---|---|
| Polyurethane aqueous composition | 320 parts by weight (80 mass% in |
| of Production Example 1 | terms of solid content in film) |
| PE Wax A | 25 parts by weight (10 mass% in |
| | terms of solid content in film) |
| Colloidal silica | 50 parts by weight (10 mass% in |
| | terms of solid content in film) |

A coating solution having the constitution shown above was coated on a metal sheet by a bar coater and bake-dried at a metal sheet achievable temperature of 80°C using a heating furnace at 180°C to form a lubricating film, having a composition shown in Tables 1 and 2, on the metal sheet.

In order to confirm that a film comprising an alkali-soluble polyurethane aqueous composition (A) was formed on the metal sheet, a spectral identification corresponding to the urethane resin components was performed by the following FT-IR analysis (highly-sensitive reflection method and hydrofluoric acid-microscopic reflection method).

### (1) Highly-Sensitive Reflection Method

Nondestructive analysis. Resolution: 4 cm⁻¹, detector: TGS, incident beam: 13 mmφ, beam incident angle: 75° (with use of a polarizer), number of integrations: 100 times.

### (2) Hydrofluoric Acid-Microscopic Reflection Method

A surface-lubricated metal sheet of 1 cm × 1 cm square was dipped in hydrofluoric acid and the free film after the elution of silica portion was attached on a stainless steel sheet to prepare a test sample.
Resolution: 4 cm⁻¹, detector: MCT, incident beam: 250 µm square, number of integrations: 500 times.

Whichever method was used, peaks appeared in the vicinity of 1,540 m⁻¹ (ascribable to C-N stretching and N-H deformation vibration of a urethane bond), in the vicinity of 1,650 m⁻¹ (ascribable to C=O stretching of urea), in the vicinity of 1,730 m⁻¹ (ascribable to C=O stretching of urethane bond) and in the vicinity of 3,330 m⁻¹ (ascribable to N-H stretching of urethane bond). These are the wave numbers characteristic of a polyurethane composition and therefore, it was confirmed that the film contains the components of a polyurethane composition.

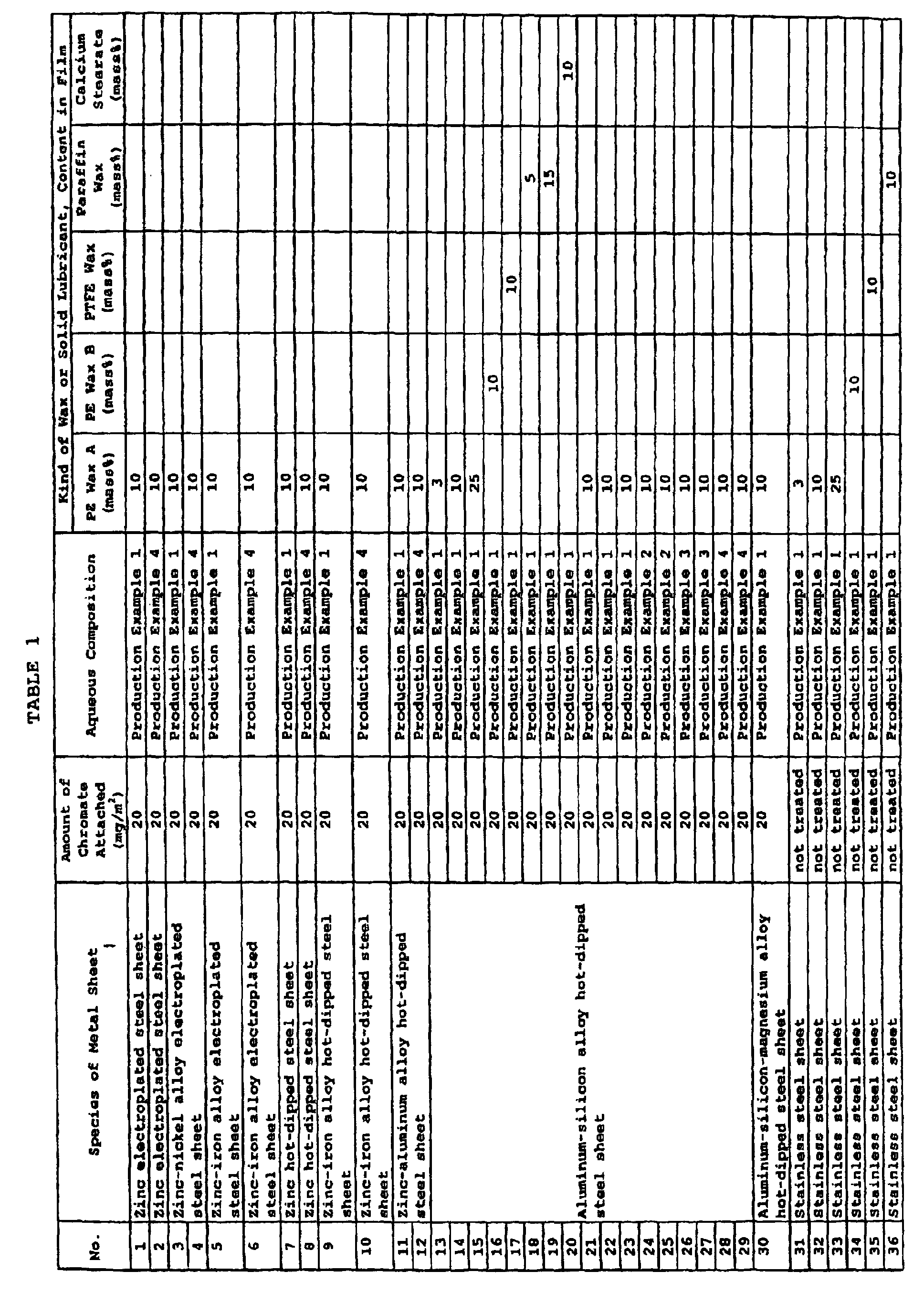

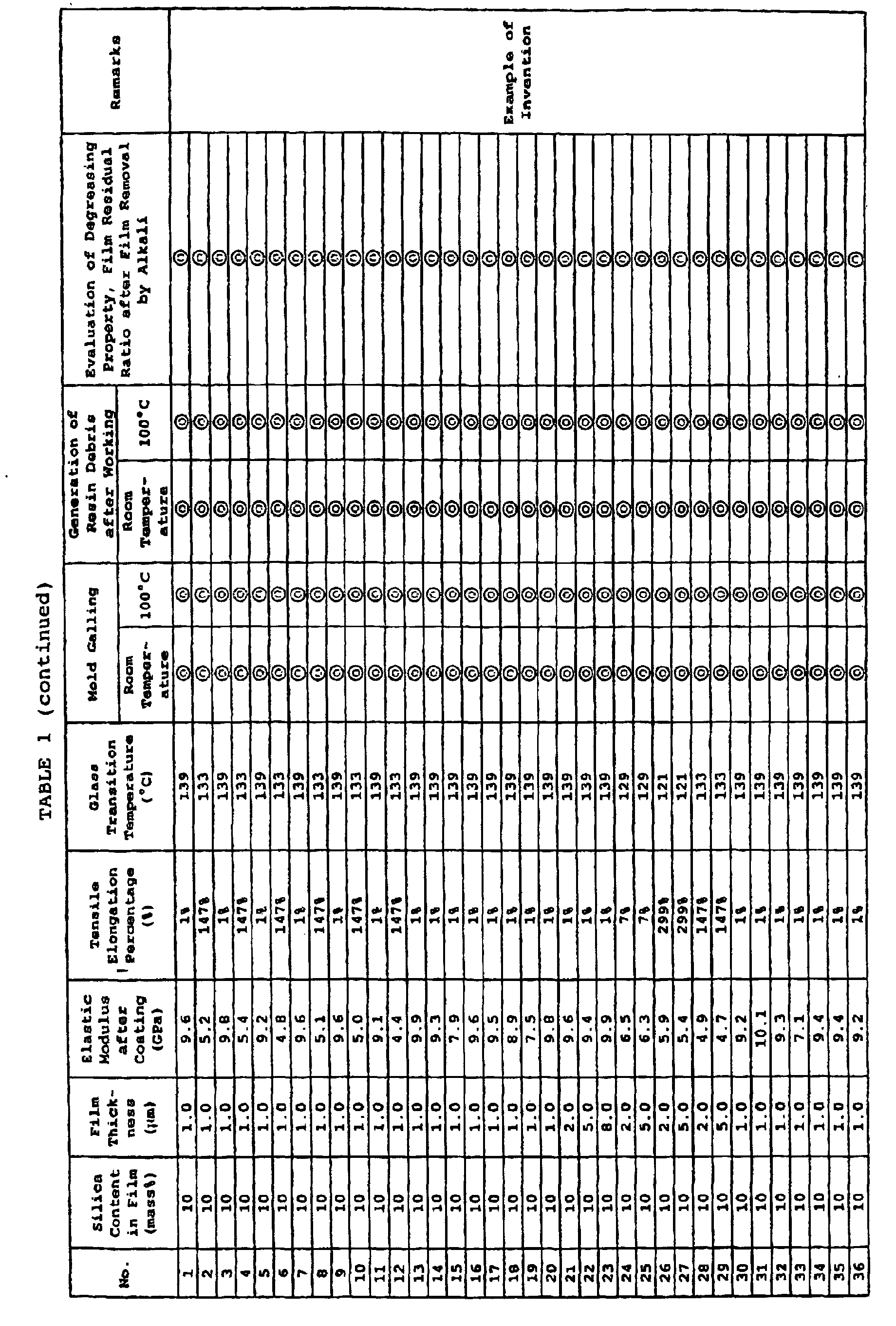

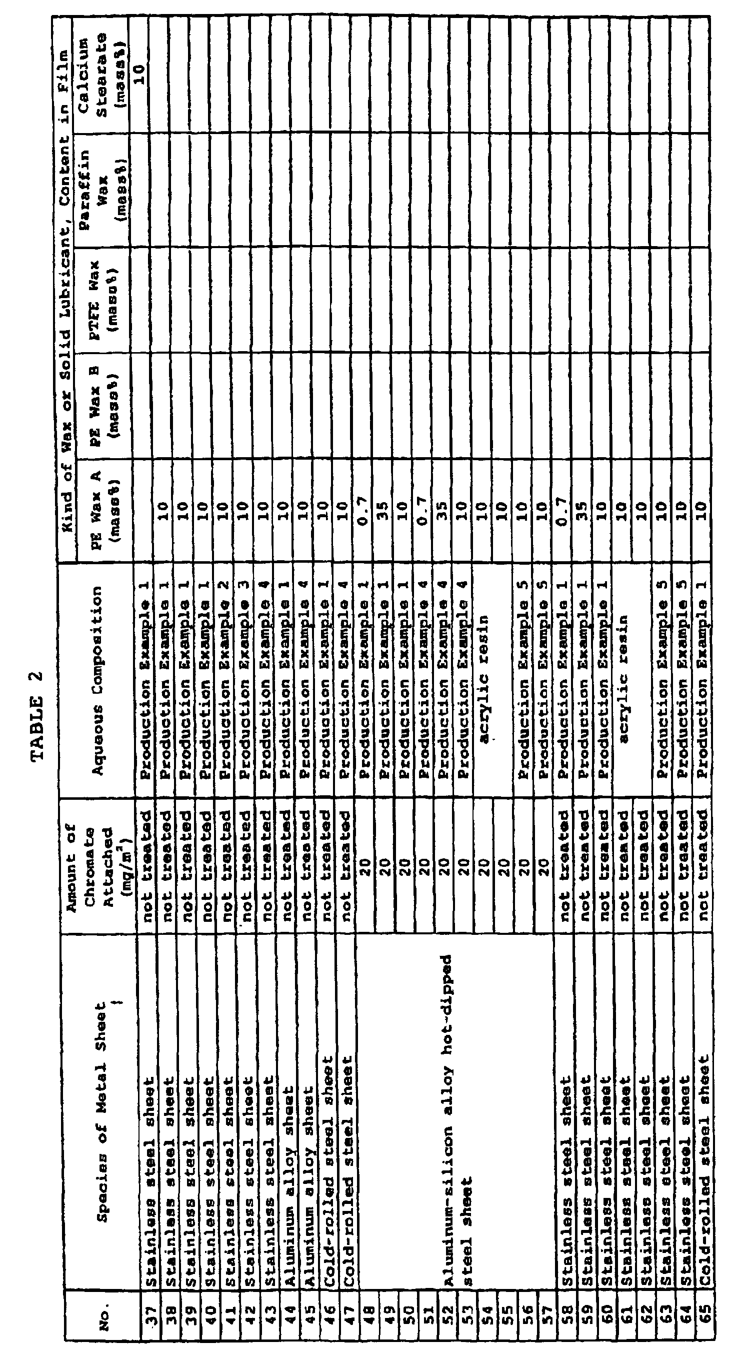

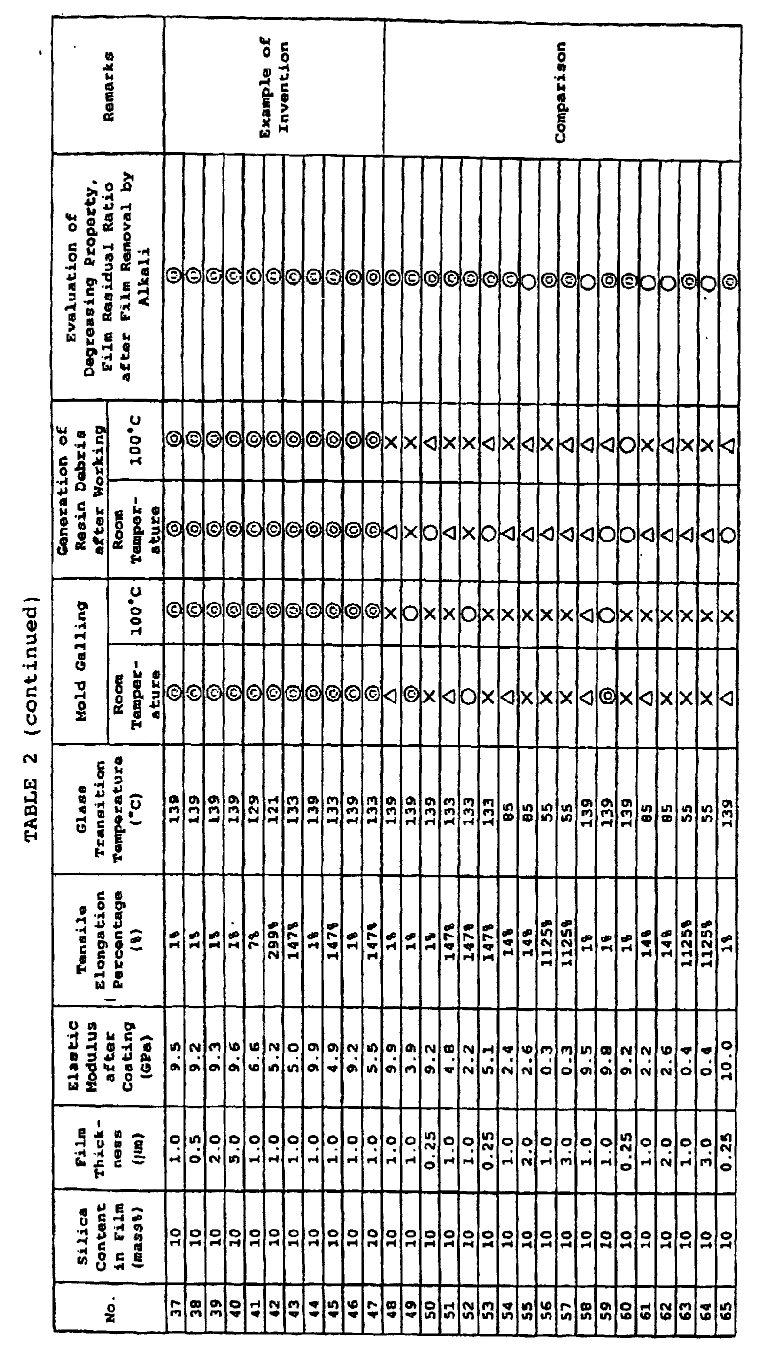

### (Examples 2 to 47 and Comparative Examples 48 to 65)

Surface-lubricated metal sheets were produced in the same manner as in Example 1 by baking a lubricating film having a composition shown in Tables 1 and 2 (Example Nos. 2 to 47 and Comparative Example Nos. 48 to 65) on each metal sheet. Here, similarly to Example 1, it was confirmed by FT-IR analysis that a polyurethane composition is contained in the film. Using an alkali-soluble acrylic aqueous composition as a comparative material of the polyurethane aqueous composition, the film formation was performed in the same manner (Comparative Example Nos. 54, 55, 61 and 62).

### 6. Test and Evaluation Methods

The surface-lubricated metal sheets produced above were evaluated on the following performances.

### (1) Measurement of Elastic Modulus after Coating

The elastic modulus of film after coating on a metal surface was determined under the following conditions using an ultrafine hardness testing machine "FISHER SCOPE H-100" manufactured by Fisher Instrument Co. This measurement can be performed not only by this device but also by other similar general-purpose devices.

### Indenter:

Vickers quadrangular pyramid-shaped diamond indenter Measurement temperature: 25°C

### Maximum penetration depth of indenter:

1/2 or less of film thickness; in order to eliminate the effect of metal surface far harder than film, the press fitting (increase of load) was stopped in the depth range where the gradient of a graph configured by the square root (F1/2) of applied load F and the penetration depth h becomes constant [d(F1/2)/dh = constant], and subsequently, the load was decreased.

### Applied Load Increasing Mode:

The load was stepwise increased every 1.0, 2.0 or 4.0 seconds. With the square root (F1/2) of applied load F and the elapsed time t, d(F1/2)/dt = constant. In order to reduce the effect of film creep, the load application time was set to 4 seconds at the longest. Applied Load Decreasing Mode:

The load was stepwise decreased every 1.0, 2.0 or 4.0 seconds. With the square root (F1/2) of applied load F and the elapsed time t, d(F1/2)/dt = constant.

### (2) Measurement of Tensile Elongation Percentage

The tensile elongation percentage of the alkali-soluble polyurethane aqueous composition as the main component of the lubricating film was determined under the following conditions using STROGRAPH R manufactured Toyo Seiki Seisaku-Sho, Ltd. This measurement can be performed not only by this device but also by using a general tensile tester made by another company.

### Sample:

An emulsion solution of alkali-soluble polyurethane aqueous composition was cast on a clean glass plate, air-dried and then dried under heating for about 1 hour in an oven set at 100°C to form a thin film having a uniform film thickness (film thickness range: 10 to 200 µm), and a thin film specimen in a width of 10 mm was cut out while not causing cracks or flaws at the end part and used as the sample.

### Measurement Conditions:

Measurement temperature: 25°C, chuck-to-chuck distance: 10 mm, pulling rate: 5 mm/min.

The tensile elongation percentage of the alkali-soluble polyurethane aqueous composition constituting the surface-treating film of the alkali soluble lubricant surface-treated metal product may be measured as follows. An alkali-soluble surface-lubricating film is dissolved from a surface-treated metal product to remove solid matters such as lubricating function-imparting agent and silica and thereby separate the alkali-soluble polyurethane aqueous composition, then a thin film of the alkali-soluble polyurethane aqueous composition is formed in the same manner as above, and the tensile elongation percentage thereof is measured.

### (3) Measurement of Glass Transition Temperature

The glass transition temperature of the polyurethane aqueous composition in the lubricating film was determined from the peak on a DSC curve obtained under the following conditions using a differential scanning calorimeter (DSC-6200R) manufactured by Seiko Instruments Inc. This can also be measured by using a general-purpose device made by another company.

### Sample:

The lubricating film powder scraped off from the surface of the surface-lubricated metal sheet was placed in an aluminum sample dish and used as the sample. Measurement Conditions:

The measurement was performed from room temperature to 230°C at a temperature-rising rate of 5.0°C/min in a dry nitrogen flow atmosphere.

### (4) Evaluation of Mold Galling

A shaping test was performed under the following conditions using a hydraulic shaping tester with a cylindrical punch. As for the temperature conditions in the shaping test, the evaluation was performed at the two levels of room temperature and a mold temperature (100°C) elevated due to continuous pressing.

| | |
|---|---|
| Punch diameter | 70 mmφ |
| Blank diameter | 150 mmφ |
| Pressing load | 5 kgf/cm² |
| Shaping rate | 3.3×10⁻² m/s |
| Tool condition | FCD-500 |

In all cases, the steel sheet was shaped to 80% of the maximum shaping height and the mold galling was evaluated according to the following indices.
- ⓞ:: The steel sheet could be shaped and the surface was free of defects.
- ○:: The steel sheet could be shaped and the surface was free of defects but the sliding surface was slightly discolored.
- Δ:: The steel sheet could be shaped but a galling flaw was slightly generated on the surface.
- ×:: The steel sheet could be shaped but a large number of linear galling flaws were generated on the surface.

Also, the generation of resin debris after working was evaluated according to the following indices.
- ⓞ:: Debris was not generated.
- ○:: Trace resin debris was generated.
- Δ:: Resin debris was slightly generated.
- ×:: A large amount of resin debris was generated.

### (5) Evaluation of Degreasing Property

The test piece was sprayed with a degreasing solution FC-4358 (produced by Nihon Parkerizing Co., Ltd., pH: adjusted to 0.5, liquid temperature: 40°C) for 8 seconds, then washed with water and dried and thereafter, the film residual ratio was measured by infrared spectroscopic analysis and evaluated.
- ⓞ:: No film.
- ○:: The film residual area percentage is 5% or less.
- Δ:: The film residual area percentage is more than 5% to 10%.
- ×:: The film residual area percentage is more than 10%.

The tensile elongation percentage of the aqueous composition was 1% in the case of Production Example 1, 7% in the case of Production Example 2, 299% in the case of Production Example 3, 147% in the case of Production Example 4, 1,125% in the case of Production Example 5, and 14% in the case of acrylic resin.

As seen from Tables 1 and 2, the surface-lubricated metal product according to the present invention exhibits excellent shapability in both cases of room temperature and a mold temperature (100°C) elevated due to continuous pressing, generates less debris after shaping and ensures good film removal by the alkali degreasing. On the other hand, when the aqueous composition, the amount of wax added, the film thickness and the elastic modulus after coating are each out of the range specified in the present invention, poor shapability results and resin debris is readily generated after shaping.

### INDUSTRIAL APPLICABILITY

The metal product of the present invention is free of mold galling even under severe shaping conditions and is deprived of the lubricating film after degreasing and therefore, is suitably used for uses where the glossy metal surface or a metal texture is required or a good welding property is demanded. Thus, the present invention has a very high industrial value.

## Claims

1. A surface-lubricated metal product with excellent shapability, comprising a metal having coated on both surfaces or on one surface thereof an alkali-soluble lubricating film mainly comprising (A) an alkali-soluble polyurethane aqueous composition containing a carboxyl group or a sulfonic acid group within the molecule and (B) a lubricating function-imparting agent in an amount of 1 to 30 mass% based on said alkali-soluble polyurethane aqueous composition, said film being coated to have a film thickness of 0.5 to 10 µm and the elastic modulus of said film after coating being 0.5 to 20 GPa at 25°C.

2. The surface-lubricated metal product with excellent shapability as claimed in claim 1, wherein the alkali-soluble lubricating film mainly comprises (A) an alkali-soluble polyurethane aqueous composition, (B) a lubricating function-imparting agent in an amount of 1 to 30 mass% based on said alkali-soluble polyurethane aqueous composition and (C) silica particles in an amount of 1 to 30 mass% based on said alkali soluble polyurethane aqueous composition.

3. The surface-lubricated metal product with excellent shapability as claimed in claim 1 or 2, wherein the amount of the acid radical contained in the alkali-soluble polyurethane aqueous composition (A) constituting the alkali-soluble lubricating film is from 30 to 180 in terms of the acid value.

4. The surface-lubricated metal product with excellent shapability as claimed in claim 1 or 2, wherein a neutralizer for the acid radical contained in the alkali-soluble polyurethane aqueous composition (A) constituting the alkali-soluble lubricating film is sodium hydroxide or potassium hydroxide.

5. The surface-lubricated metal product with excellent shapability as claimed in any one of claims 1 to 4, wherein the main component of the alkali-soluble polyurethane aqueous composition (A) constituting the alkali-soluble lubricating film is a polyester polyol.

6. The surface-lubricated metal product with excellent shapability as claimed in any one of claims 1 to 5, wherein the lubricating function-imparting agent (B) comprises one or more member selected from the group consisting of a polyolefin-base wax, a paraffin-base wax, a stearic acid-base solid lubricant and a wax comprising a fluorine-containing resin.

7. The surface-lubricated metal product with excellent shapability as claimed in any one of claims 1 to 6, wherein the elastic modulus of said film after coating is 0.5 to 6 GPa at 25°C and, at the same time, the tensile elongation percentage of the alkali-soluble polyurethane aqueous composition (A) as the main component of said film exceeds 10%, or, the elastic modulus of said film after coating exceeds 6 GPa at 25°C and, at the same time, the tensile elongation percentage of the alkali-soluble polyurethane aqueous composition (A) as the main component of said film, is 10% or less.

8. The surface-lubricated metal product with excellent shapability as claimed in any one of claims 1 to 7, wherein the glass transition temperature of the alkali-soluble polyurethane aqueous composition (A) in the coated lubricating film is 100°C or more.

9. A surface-lubricated metal product with excellent shapability, comprising a metal having coated on both surfaces or one surface thereof an alkali-soluble lubricating film mainly comprising (A) an alkali-soluble polyurethane aqueous composition containing a carboxyl group or a sulfonic acid group within the molecule and (B) a lubricating function-imparting agent in an amount of 1 to 30 mass% based on said alkali-soluble polyurethane aqueous composition, the main component of the alkali-soluble polyurethane aqueous composition being a polyester polyol, a neutralizer for the acid radical contained in the alkali-soluble polyurethane aqueous composition (A) being sodium hydroxide or potassium hydroxide, the amount of the acid radical contained in the alkali-soluble polyurethane aqueous composition (A) being from 30 to 180 in terms of the acid value, the lubricating function-imparting agent (B) comprising one or more member selected from the group consisting of a polyolefin-base wax, a paraffin-base wax, a stearic acid-base solid lubricant and a wax comprising a fluorine-containing resin, the alkali-soluble lubricating film being coated to have a film thickness of 0.5 to 10 µm, the elastic modulus of said film after coating being 0.5 to 6 GPa at 25°C and, at the same time, the tensile elongation percentage of the alkali-soluble polyurethane aqueous composition (A) as the main component of said film exceeding 10%, or the elastic modulus of said film after coating exceeding 6 GPa at 25°C and, at the same time, the tensile elongation percentage of the alkali-soluble polyurethane aqueous composition (A) as the main component of said film being 10% or less, and the glass transition temperature of the alkali-soluble polyurethane aqueous composition (A) being 100°C or more.

10. The surface-lubricated metal product with excellent shapability as claimed in claim 9, which further comprises (C) silica particles in an amount of 1 to 30 mass% based on the alkali-soluble polyurethane aqueous composition.
